# EUROPÄISCHE PATENTSCHRIFT

(11) **EP 0 669 773 B1**
(45) Veröffentlichungstag und Bekanntmachung des Hinweises auf die Patenterteilung: **09.05.2012**
(21) Anmeldenummer: 95102511.3
(22) Anmeldetag: 22.02.1995
(51) Int. Cl.: H04W 76/02, H04M 3/42, H04W 84/16

(54) **Kommunikationssystem mit einer mit Personalcomputern und drahtlosen Fernsprechsystemen verbundenen Kommunikationsanlage**
Communication system with personal computers and wireless telephone system connected to communication equipment
Système de communication avec ordinateurs personnels et système de téléphonie "sans fil" connectés à l'équipement de communication

(30) Priorität: 28.02.1994 DE 4406505
(43) Veröffentlichungstag der Anmeldung: 30.08.1995
(73) Patentinhaber: Siemens Enterprise Communications GmbH & Co. KG, 81379 München (DE)
(72) Erfinder: Langmantel, Ernst, Dipl.-Ing., A-1210 Wien (AT)
(74) Vertreter: Fritzsche, Thomas

(56) Entgegenhaltungen:
- EP-A- 0 526 106
- US-A- 5 276 680
- A S TANENBAUM: "IEEE STANDARD 802.3 AND ETHERNET" COMPUTER NETWORKS (PASSAGE),1993, Seiten 141-147, XP002057941

## Beschreibung

Die Erfindung betrifft ein Kommunikationssystem mit durch ein lokales Netz verbundenen Personalcomputern, denen jeweils zumindest ein Kommunikationsendgerät eines drahtlosen, zumindest eine Basisstation umfassenden Fernsprechsystems zugeordnet ist, wobei die zumindest eine Basisstation mit einer Kommunikationsanlage über eine Verbindung verbunden ist.

Drahtlose Fernsprechsysteme umfassen eine Basisstation - bzw. ein Festteil -, an die über eine Funkverbindung ein oder mehrere Kommunikationsendgeräte - bzw. Mobilteile - angeschlossen sind. Die Funkübertragung erfolgt beispielsweise gemäß dem DECT - Standard (Digital European Cordless Telephony) oder dem GSM - Standard (Group Special Mobile). In diesen Standards sind neben den funktechnischen Festlegungen die Kanalstrukturen für einen drahtlosen Anschluß mehrerer Kommunikationsendgeräte definiert. Die Basisstationen sind mit Hilfe bekannter Übertragungstechniken - z.B. analoge oder digitale Übertragungsverfahren - über ein oder mehrere Verbindungen mit einer Kommunikationsanlage - insbesondere einer Fernsprechnebenstellenanlage - verbunden. Hierzu ist die Kommunikationsanlage mit analogen a/b - Schnittstellen oder mit digitalen ISDN - Schnittstellen ausgestattet.

Bei einer Zuordnung eines Kommunikationsendgerätes eines drahtlosen Fernsprechsystems zu einem Personalcomputer, bei dem das Kommunikationsendgerät im Sinne eines schnurlosen Hörers für einen Personalcomputer wirkt - PC-Telefon -, sind in diesem zusätzliche Programme und eine Fernsprechkarte installiert, an die sowohl die Kommunikationsanlage als auch die Basisstation angeschlossen sind. Bei dieser Zuordnung wird der Anschluß einer Basisstation, d.h. Nachrichten- und Signalisierungskanäle, durch den Personalcomputer geführt, wodurch die Signalisierung vom Kommunikationsendgerät zur Kommunikationsanlage und umgekehrt im Personalcomputer mitgelesen, an dessen Bildschirm visualisiert und beeinflußt werden kann. Darüberhinaus kann die Signalisierung für das zugeordnete Kommunikationsendgerät vollständig durch den Personalcomputer abgewickelt werden. Dies bedeutet, daß die Signalisierungsinformationen - z.B. Wahlinformationen - im Personalcomputer bedieneroberflächengesteuert - z.B. mit Hilfe der Eingabetastatur oder einer Maus - gebildet und an die Kommunikationsanlage übermittelt werden. Aufgrund der komfortablen Bedieneroberfläche und Visualisierung am Bildschirm des Personalcomputers wird eine komfortable Signalisierung für die zugeordneten Kommunikationsendgeräte erreicht und zusätzlich sind unterschiedliche, die Signalisierung unterstützende Funktionen - z.B. ein Telefonverzeichnis mit Suchprozeduren - komfortabel realisierbar.

Eine derartige Kommunikationsanordnung eines Personalcomputers mit einem zugeordneten drahtlosen Fernsprechsystem erfordert einen erheblichen programmtechnischen und schaltungstechnischen Aufwand im Personalcomputer - zusätzliche Fernsprechkarte einschließlich der Programme.

Desweiteren sind Personalcomputer insbesondere in größeren Verwaltungseinheiten mit Hilfe eines lokalen Netzes vernetzt. Für die Vernetzung von Personalcomputern werden insbesondere lokale Busnetze eingesetzt, die in der Fachwelt auch als Ethernet oder Cheapernet bekannt sind. Der Zugriff der einzelnen Personalcomputer auf das Busnetz bzw. die Busleitung erfolgt überwiegend gemäß dem im IEEE-Standard 802.3 standardisierten CSMA/CD-Verfahren (Carrier Sense Multiple Access with Collision Detection). In zunehmendem Maße, insbesondere aufgrund geforderter hoher Datenübermittlungsraten sind auch Ring- oder Sternnetze, beispielsweise gemäß dem IEEE-Standard 802.4 bis 802.6 vorgesehen.

US Patent 4 866 758 offenbart eine Technik zur Bereitstellung eines Phone Management (PM) Servers für Personal Computers (PCs), die Endbenutzer auf einen PC-only Local Area Network (LAN) zu Sprachendgeräten eines Sprach- und Datennetzwerkes zu den PCs zuordnet. Hierzu ist der PM-Server als Interface zwischen dem PC und dem PBX ausgebildet.

Die der Erfindung zugrundeliegende Aufgabe besteht darin, den Aufwand für eine Zuordnung eines Kommunikationsendgerätes eines drahtlosen Fernsprechsystems zu einem Personalcomputer zu vermindern. Die Aufgabe wird von dem Kommunikationssystem des Patentanspruchs 1 gelöst.

Der wesentliche Aspekt der Erfindung ist darin zu sehen, daß im lokalen Netz eine Netzübergangseinrichtung angeordnet ist, die über zumindest eine weitere Verbindung mit der Kommunikationsanlage verbunden ist, und die Kommunikationsanlage und die Netzübergangseinrichtung sind derart ausgestaltet, daß im jeweiligen Personalcomputer oder im jeweils zugordneten Kommunikationsendgerät gebildete oder gespeicherte Signalisierungsinformationen an die Kommunikationsanlage und in der Kommunikationsanlage gebildete oder gespeicherte Signalisierungsinformationen sowohl an den jeweiligen Personalcomputer als auch an das jeweils zugeordnete Kommunikationsendgerät gesteuert werden. Zusätzlich gemäß Anspruch 2 kann das Kommunikationssystem und die Netzübergangseinrichtung derart ausgestaltet sein, daß im Personalcomputer bzw. im Kommunikationsendgerät gebildete Signalisierungsinformationen zusätzlich an das zugeordnete Kommunikationsendgerät bzw. den zugeordneten Personalcomputer gesteuert werden.

Das erfindungsgemäße Kommunikationssystem mit einer an die Kommunikationsanlage angeschlossenen Netzübergangseinrichtung wird vorteilhaft für mehrere an ein lokales Netz angeschlossene Personalcomputer eingesetzt, denen jeweils ein Kommunikations-endgerät eines drahtlosen Fernsprechsystems zugeordnet ist, da der Aufwand für eine Realisierung einer Netzübergangseinrichtung gegenüber dem Aufwand für mehrere zusätzliche Fernsprechkarten erheblich geringer ist. Besonders vorteilhaft ist das erfindungsgemäße Kommunikationssystem bei einem bereits vorhandenen Anschluß eines mit mehreren Personalcomputern verbundenen lokalen Netzes an eine Kommunikationsanlage zu realisieren, da hierbei lediglich in der Kommunikationsanlage die vermittlungstechnische Zuordnung des jeweilichen Personalcomputers zu dem zugeordneten Kommunikationsendgerät insbesondere programmtechnisch zu realisieren ist. Gegenüber einer Lösung mit Fernsprechkarten in den Personalcomputern ist ein weiterer Vorteil des erfindungsgemäßen Kommunikationssystems darin zu sehen, daß bei einem Ausfall des Personalcomputers die Funktionsfähigkeit der Basisstationen uneingeschränkt erhalten bleibt.

Vorteilhaft ist die Verbindung zwischen der zumindest einen Basisstation und der Kommunikationsanlage und die weitere Verbindung zwischen der Netzübergangseinrichtung und der Kommunikationsanlage durch zumindest eine Leitung realisiert und die Leitung ist jeweils mit einem Anschluß der Kommunikationsanlage und mit einem Anschluß der Basisstation oder Netzübergangseinrichtung verbunden - Anspruch 3. Alternativ ist die Verbindung zwischen der Netzübergangseinrichtung und der Kommunikationsanlage durch eine drahtlose Verbindung realisiert und die drahtlose Verbindung ist jeweils mit einem Anschluß der Kommunikationsanlage und mit einem Anschluß der Netzübergangseinrichtung verbunden - Anspruch 4.

Die Anschlüsse der Kommunikationsanlage und die Anschlüsse der zumindest einen Basisstation und der Netzübergangseinrichtung sind vorteilhaft durch einen ISDN-orientierten Anschluß realisiert - Anspruch 5. Hierbei sind die eine oder mehreren Basisstationen an die Kommunikationsanlage vorzugsweise jeweils an einen ISDN-Basisanschluß SO angeschlossen. Beispielsweise ist eine gemäß dem DECT-Standard realisierte Basisstation - d.h. an eine Basisstation sind zwölf Kommunikationsendgeräte blockierungsfrei anschließbar - über drei SO - Basisanschlüsse angeschlossen, wobei über einen Basisanschluß mit zwei 64 kbit/s - Nachrichtenkanälen vier komprimierte - 32 kbit/s -, drahtlose Kommunikationsendgeräte bidirektional vermittelt werden. Der Anschluß der Netzübergangseinrichtung ist in Abhängigkeit von der Anzahl der an das lokale Netz angeschlossenen Personalcomputer mit einem zugeordneten Kommunikationsendgerät eines drahtlosen Fernsprechsystems durch einen ISDN-Basisanschluß oder durch einen ISDN-Multiplexanschluß realisierbar, wobei ein ISDN-Basisanschluß zwei und ein ISDN-Multiplexanschluß dreißig Nachrichtenkanäle aufweist. Alternativ sind die ISDN- Basisanschlüsse zusätzlich mit einer integrierten Übertragungstechnik ausgestattet. Eine besonders wirtschaftliche Realisierung ist durch eine Übertragungstechnik gemäß dem Zeitgetrenntlage-Übertragungsverfahren erreichbar. Eine derartige übertragungstechnische Anbindung von Basisstationen an eine Kommunikationsanlage ist vorteilhaft gemäß dem in der deutschen Patentanmeldung 41 41 493.4 vorgeschlagenen Übertragungskonzept realisierbar.

Gemäß einer Weiterbildung des erfindungsgemäßen Kommunikationssystem ist das lokale Netz (LAN) durch ein lokales Busnetz realisiert und die Personalcomputer werden mit Hilfe von Netzzugriffseinrichtungen an das lokale Busnetz gekoppelt - Anspruch 7. Vorteilhaft ist das lokale Busnetz gemäß dem IEEE-Standard 802.3 realisiert - Anspruch 8. Ein Busnetz gemäß dem IEEE-Standard 802.3 ist besonders wirtschaftlich realisierbar, da für die häufig eingesetzen Busnetze kostengünstige Netzkomponenten verfügbar sind.

Alternativ ist das lokale Netz durch ein drahtloses, lokales Busnetz realisierbar - Anspruch 9. Zubeachten ist hierbei, daß die Sende- und Empfangsfrequenzen des drahtlosen Fernsprechsystems und des drahtlosen Busnetzes derart bestimmt sind, daß eine gegenseitige Beeinflussung vermieden wird. Sowohl bei einem drahtgebundenem als auch bei einem drahtlosen Busnetz ist die Netzübergangseinrichtung in die Kommunikationsanlage integrierbar - Anspruch 6. Durch die Integration können physikalische Schnittstellenanpassungen vermieden und insbesondere konstruktive Einsparungen erreicht werden.

Für die vermittlungstechnische Zuordnung ist in der Kommunikationsanlage eine Zuordnungsroutine derart ausgestaltet, daß die in der Kommunikationsanlage gebildeten oder gespeicherten Signalisierungsinformationen über die betreffenden Teilnehmeranschlüsse an die betroffene Basisstation und an die betroffene Netzübergangseinrichtung übermittelt werden - Anspruch 10. Die Zuordnungsroutine stellt einen programmtechnischen Teil des Vermittlungsprogramms der Kommunikationsanlage dar und ist in dieses in Abhängigkeit von der Ausgestaltung des vorhandenen Vermittungsprogramms eingebunden oder in diesem als eigenständige Routine implementiert.

Zur vermittlungstechnischen Steuerung der Netzübergangseinrichtung ist in dieser eine Signalisierungsroutine derart ausgestaltet, daß die kommunikationsanlagengemäßen Signalisierungsinformationen und die Netzadressen der betroffenen Personalcomputer in lokale-Netz-gemäße Übertragungstelegramme eingefügt werden - Anspruch 11. Die Netzadressen der Personalcomputer im lokalen Netz werden mit Hilfe der Zuordnungsroutine der Kommunikationsanlage oder der Signalisierungsroutine der Netzübergangseinrichtung ermittelt - Anspruch 12.

Im folgenden ist das erfindungsgemäße Kommunikationssystem anhand dreier Blockschaltbilder näher erläutert. Dabei zeigen
- Fig. 1: in einem Blockschaltbild mehrere Ausgestaltungsvari- anten des erfingungsgemäßen Kommunikationssystems,
- Fig. 2: in einem Blockschaltbild die Programmstruktur der Kommunikationsanlage mit einer Zuordnungsroutine,
- Fig. 3: in einem Blockschaltbild den Aufbau einer Netzüber- gangseinrichtung mit einer Signalisierungsroutine und
- Fig. 4: in einem Blockschaltbild das erfindungsgemäße Kommu- nikationssystem mit mehreren Basisstationen und meh- reren Personalcomputern.

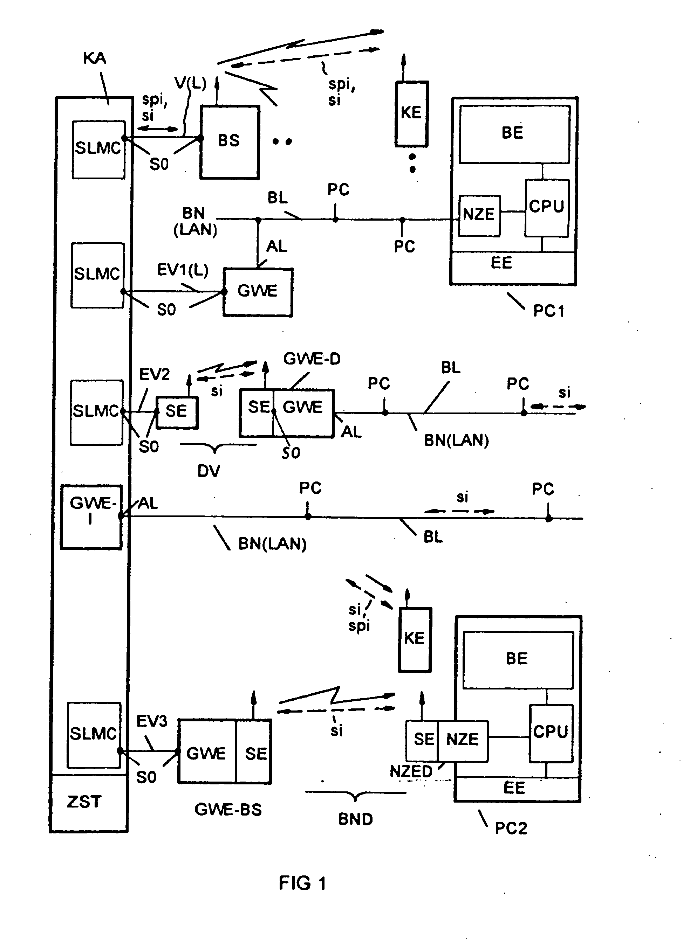

Fig. 1 zeigt eine Kommunikationsanlage KA mit mehreren für den Anschluß von Basistationen BS vorgesehenen Teilnehmeranschlußmodulen SLMC, wobei für die in Fig. 1 dargestellten Weiterbildungsvarianten des erfindungsgemäßen Kommunikationssystems jeweils ein Teilnehmeranschlußmodul SLMC vorgesehen ist. Prinzipiell sind die weiteren Komponenten des Kommunikationssystems für jede Ausgestaltungsvariante an ein einziges Teilnehmeranschlußmodul SLMC anschließbar. Für das Ausführungsbeispiel sei angenommen, daß die Teilnehmeranschlußmodule SLMC ISDN-Basisanschlüsse SO aufweisen. Ein Teilnehmeranschlußmodul SLMC ist jeweils über zumindest eine Verbindung V mit einer Basisstation BS eines drahtlosen Fernsprechsystems verbunden. Dieses für den Anschluß von Basistationen BS ausgestaltete Teilnehmeranschlußmodul SLMC unterscheidet sich von nicht dargestellten Teilnehmeranschlußmodulen für den Anschluß von ISDN - Kommunikationsendgeräten insbesondere hinsichtlich einer modifizierten Signalisierungsprozedur und unterschiedlichen Datenübertragungseigenschaften. Die Basisstation BS ist für den Anschluß von Verbindungen V mit gleichartig wie in der Kommunikationsanlage KA realisierten ISDN-Basisanschlüssen SO ausgestattet - beispielhaft ist eine Verbindung und ein ISDN- Basisanschluß SO dargestellt. Alternativ - nicht dargestellt - sind die ISDN- Basisanschlüsse SO zusätzlich mit einer integrierten Übertragungstechnik ausgestattet. Eine besonders wirtschaftliche Realisierung ist durch eine Übertragungstechnik gemäß dem Zeitgetrenntlage-Übertragungsverfahren erreichbar. Eine derartige übertragungstechnische Anbindung von Basisstationen an eine Kommunikationsanlage sowie eine vorteilhafte Ausgestaltung der Teilnehmeranschlußmodule SLMC und der Basisstationen BS ist vorteilhaft gemäß des in der deutschen Patentanmeldung 43 09 848.7 vorgeschlagenen Konzeptes für ein Kommunikationssystem zum Anschluß an eine Basisstation eines mehrzellularen, drahtlosen Fernsprechsystems realisierbar.

An die Basisstation BS ist drahtlos, d.h. über eine Funkverbindung - mindestens ein Kommunikationsendgerät KE angeschlossen. Für das Ausführungsbeispiel sei angenommen, daß die Funkverbindung und die Kanalstruktur innerhalb der Funkverbindung gemäß dem DECT-Standard realisiert sind. Dies bedeutet, daß an die Basisstation BS drahtlos zwölf Kommunikationsendgeräte mit bidirektionaler Sprachübertragung blockierungsfrei anschließbar sind. Über die Funkverbindung werden die in den Kommunikationsendgeräten KE gebildeten und die von der Kommunikationsanlage KA übermittelten Signalisierungsinformationen si sowie die bidirektional zu übermittelnden Sprachinformationen spi übertragen.

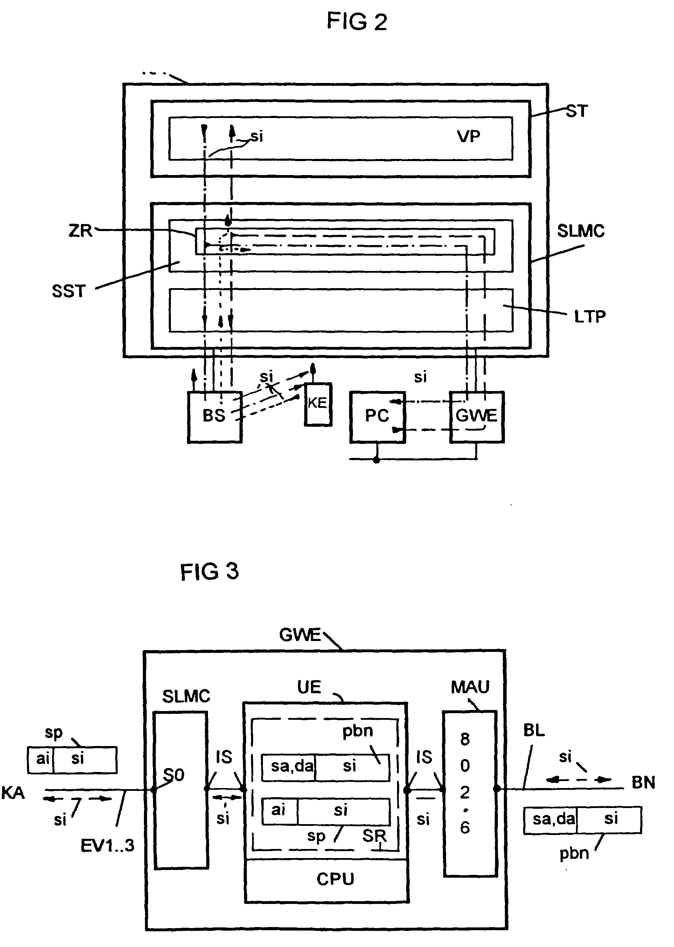

An ein weiteres, ebenfalls mit einem ISDN-Basisanschluß ausgestattetes Teilnehmeranschlußmodul SLMC ist über eine erste weitere Verbindung EV1 ein ISDN-Basisanschluß SO einer Netzübergangseinrichtung GWE angeschlossen. Die Netzübergangseinrichtung GWE weist einen Anschluß AL auf, der mit einem lokalen Netz LAN verbunden ist. Für das Ausführungsbeispiel sei angenommen, daß das lokale Netz LAN durch ein Busnetz BN realisiert ist. Hierbei sind an die Busleitung BL neben der Netzübergangseinrichtung GWE mehrere Personalcomputer PC angeschlossen. In Fig. 1 ist beispielhaft der Aufbau eines der angeschlossenen Personalcomputer PC1 dargestellt. Dieser Personalcomputer PC1 weist eine Netzzugriffseinrichtung NZE auf, die mit der Busleitung BL des Busnetzes BN verbunden ist. Der Personalcomputer PC1 ist weiterhin mit einer bekannten Eingabeeinrichtung EE - die bekannte Eingabetastatur oder Maus -, einer Bildschirmeinrichtung BE und mit einem Mikroprozessorsystem CPU ausgestattet, wobei das Mikroprozessorsystem CPU den Personalcomputer PC1 steuert und überwacht. Für das Ausführungsbeispiel sei weiterhin angenommen, daß diesem Personalcomputer PC1 ein drahtlos an die Basisstation BS angeschlossenes Kommunikationsendgerät KE zugeordnet ist. Dies bedeutet, daß die Signalisierung für dieses Kommunikationsendgerät KE im Personalcomputer PC1 durchgeführt werden kann. Hierzu werden beispielsweise mit Hilfe der komfortablen Bedieneroberfläche und der bedienerfreundlichen Visualisierung Wählinformationen eingegeben oder aus einem im Personalcomputer PC1 gespeicherten Telefonbuch ausgelesen und im Sinne eines Einleitens eines Verbindungsaufbaus für das zugeordnete Kommunikationsendgerät über das Busnetz BN, die Netzübergangseinrichtung GWE an die Kommunikationsanlage KA übermittelt. Diese Signalisierungsinformationen si können in der Kommunikationsanlage KA über das Teilnehmeranschlußmodul SLMC an die Basisstation BS und drahtlos an das Kommunikationsendgerät KE übermittelt und dort angezeigt werden. Der Fluß der Signalisierungsinformation si in der Kommunikationsanlage KA ist in Fig. 2 näher erläutert. Für die Steuerung - auch der Signalisierungsinformationen si - und Überwachung der Kommunikationsanlage KA ist diese mit einer zentralen Steuerung ZST - z.B. ein Microcomputersystem - ausgestattet.

Gemäß einer weiteren vorteilhaften Ausgestaltung des erfindungsgemäßen Kommunikationssystems ist in Fig. 1 ein weiteres Teilnehmeranschlußmodul SLMC mit einer Sende-/Empfangseinrichtung SE eines weiteren drahtlosen Übertragungssystems DÜ über eine weitere Verbindung EV2 verbunden. Diese weitere Verbindung EV2 ist jeweils an einen ISDN-Basisanschluß SO des Teilnehmeranschlußmoduls SLMC und der Sende-/Empfangseinrichtung SE angeschlossen. Die Sende-/Empfangseinrichtung SE ist drahtlos mit einer drahtlosen Netzübergangseinrichtung GWE-D verbunden. Hierzu ist die drahtlose Netzübergangseinrichtung GWE-D mit einer weiteren Sende-/Empfangseinrichtung SE ausgestattet. Desweiteren ist in der drahtlosen Netzübergangseinrichtung GWE-D eine wie vorhergehend beschriebene Netzübergangseinrichtung GWE enthalten. Für den Anschluß einer Busleitung BL eines Busnetzes BN ist die Netzübergangseinrichtung GWE mit einem Anschluß AL versehen. An die Busleitung BL sind - wie vorhergehend erläutert - mehrere Personalcomputer PC anschließbar, denen jeweils zumindest ein drahtlos an die Basisstation BS angeschlossenes Kommunikationsendgerät KE zugeordnet ist - nicht dargestellt.

Gemäß einer weiteren Ausgestaltung des erfindungsgemäßen Kommunikationssystems ist in Fig. 1 eine in eine Kommunikationsanlage KA integrierte Netzübergangseinrichtung GWE-I dargestellt. Der Aufbau dieser integrierten Netzübergangseinrichtung GWE-I entspricht im wesentlichen der vorhergehend erläuterten Netzübergangseinrichtung GWE. Lediglich konstruktive Anpassungen und Anpassungen an die kommunikationsanlageninternen physikalischen Eigenschaften sind gegebenenfalls vorzunehmen. Die integrierte Netzübergangseinrichtung GWE-I weist ebenfalls einen Anschluß AL auf, der mit einer Busleitung BL eines Busnetzes BN verbunden ist. An diese Busleitungen sind - wie vorhergehend erläutert - ebenfalls mehrere Personalcomputer PC anschließbar.

Gemäß einer weiteren Ausgestaltungsvariante des erfindungsgemäßen Kommunikationssystems ist an ein weiteres, einen ISDN-Basisanschluß SO aufweisendes Teilnehmeranschlußmodul SLMC über eine dritte, weitere Verbindung EV3 eine weitere drahtlose Netzübergangseinrichtung GWE-BS angeschlossen, die durch eine vorhergehend erläuterte Netzübergangseinrichtung GWE sowie eine, eine weitere drahtlose Verbindung - insbesondere Funkverbindung - realisierende Sende-/Empfangseinrichtung SE gebildet ist. Für den Anschluß der dritten, weiteren Verbindung EV3 ist die Netzübergangseinrichtung GWE mit einem ISDN-Basisanschluß SO ausgestattet. Diese weitere, drahtlose Netzübergangseinrichtung GWE-BS ist drahtlos, ein lokales, drahtloses Busnetz BND bildend, mit mehreren Personalcomputern PC verbunden. Beispielhaft ist in Fig. 1 ein Personalcomputer PC2 dargestellt, in dem eine drahtlose Netzzugriffseinrichtung NZED angeordnet ist. Die drahtlose Netzzugriffseinrichtung NZED ist durch eine vorhergehend beschriebenen Netzzugriffseinrichtung NZE und durch eine auf die Sende-/Empfangseinrichtung SE der drahtlosen Netzübergangseinrichtung GWE-BS abgestimmte Sende-/Empfangseinrichtung SE gebildet. Der Personalcomputer PC2 weist des weiteren ein Mikroprozessorsystem CPU auf, das mit einer Bildschirmeinrichtung BE, einer Eingabeeinrichtung EE und der drahtlosen Netzzugriffseinrichtung NZED verbunden ist. Dem Personalcomputer PC2 ist des weiteren ein mit der Basisstation BS drahtlos verbundenes Kommunikationsendgerät KE zugeordnet. Das Bilden und Übermitteln von Signalisierungsinformationen si wird entsprechend dem bereits erläuterten Verfahren in Personalcomputer PC1 bewirkt.

Fig. 2 zeigt den Fluß der von einem Personalcomputer PC oder einen Kommunikationsendgerät KE übermittelten Signalisierungsinformationen si in einer Kommunikationsanlage KA, in deren Steuerung ST ein Vermittlungsprogramm VP und in deren Teilnehmeranschlußmodulen SLMC ein Signalisierungssteuerungsprogramm SST sowie ein Leitungstechnik-Programmodul LTP in jeweils einem nicht dargestellten Speicher gespeichert ist. Beispielhaft sind an des Teilnehmeranschlußmodul SLMC eine Netzübergangseinrichtung GWE und eine Basisstation BS angeschlossen, wobei an die Netzübergangseinrichtung GWE beispielhaft ein Personalcomputer PC und an die Basisstation BS drahtlos ein dem Personalcomputer PC zugeordnetes Kommunikationsendgerät KE angeschlossen ist. Das Leitungstechnik-Programmodul LTP wickelt zusammen mit der Signalisierungssteuerung die anschlußartenindividuellen Signalisierungen und Informationsübertragungen ab. Hierbei werden die von den Anschlüssen übermittelten Anreize mittels kommunikationsanlagenspezifischer Parameter in Meldungen für das Vermittlungsprogramm VP umgesetzt und an dieses übermittelt. Analog hierzu werden vom Vermittlungsprogramm VP übermittelten vermittlungstechnischen Meldungen in anschlußindividuelle Informationen, insbesondere Signalisierungsinformationen, umgesetzt. Im Vermittlungsprogramm VP werden in Abhängigkeit der übermittelten Meldungen, d.h. Signalisierungsinformationen si die entsprechenden vermittlungstechnischen Funktionen, z.B. Verbindung von Teilnehmer A zu Teilnehmer B gesteuert. Für das Ausführungsbeispiel sei angenommen, daß in der Signalisierungssteuerung eine Zuordnungsroutine ZR eingefügt ist. Desweiteren sei angenommen, daß vom Personalcomputer PC Signalisierungsinformationen si an die Kommunikationsanlage KA übermittelt werden. Die Signalisierungsinformationen si - in Fig. 2 durch strichlierte Linien angedeutet - werden in der Kommunikationsanlage KA mit Hilfe des Leitungstechnik-Programmoduls LTP und der Signalisierungssteuerung SST an das Vermittlungsprogrammodul VP gesteuert und dort bewertet. Mit Hilfe der Zuordungsroutine ZR werden die übermittelten Signalisierungsinformationen si zusätzlich, d.h. kopiert über das Leitungstechnik-Programmoduls LTP an die Basisstation BS sowie an das Kommunikationsendgerät KE gesteuert und dort angezeigt. Voraussetzung hierbei ist, daß in der Zuordnungsroutine ZR beispielsweise durch eine betriebstechnische Eingabe eine derartige Zuordnung vorgegeben ist.

Diese Zuordnung hängt, wie in Fig.1 erläutert, von der Zuordnung eines an eine Basisstation BS drahtlos angeschlossenen Kommunikationsendgerätes zu einem mit einer Netzzugriffseinrichtung GWE verbundenem Personalcomputer PC ab. Bei mehrzellularen, drahtlosen Fernsprechsystemen ist diese Zuordnung beispielsweise durch entsprechende Eingaben im Kommunikationsendgerät KE oder in einem Personalcomputer PC zu ändern, um ein mobiles Kommunikationsendgerät weiteren Personalcomputern PC in unterschiedlichen Zellen des drahtlosen Fernsprechsystems zuordnen zu können.

Analog zur vorhergehend erläuterten Übermittlung von Signalisierungsinformationen werden von dem Kommunikationsendgerät KE übermittelten Signalisierungsinformationen si in der Kommunikationsanlage KA an das Vermittlungsprogramm VP und mit Hilfe der Zuordnungsroutine ZR gleichzeitig über die Netzübergangseinrichtung GWE an den zugeordneten Personalcomputer PC gesteuert. In der Kommunikationsanlage KA gebildete oder gespeicherte Signalisierungsinformationen si werden mit Hilfe der Zuordnungsroutine ZR sowohl an den Personalcomputer PC als auch an das Kommunikationsendgerät KE gesteuert. Der Informationsfluß ist durch gestrichelte bzw. durch strichpunktierte Linien dargestellt.

Fig. 3 zeigt in einem Blockschaltbild eine Netzübergangseinrichtung GWE, die über eine Verbindung EV1..3 mit der Kommunikationsanlage KA und über eine Busleitung BL mit dem Busnetz BN - siehe Fig. 1 - verbunden ist. In der Netzübergangseinrichtung GWE ist die Verbindung EV1..3 an einen in einem Teilnehmeranschlußmodul SLMC realisierten ISDN-Basisanschluß SO geschaltet. In diesem gleichartig zum Teilnehmeranschlußmodul SLMC der Kommunikationsanlage KA realisierten Teilnehmeranschlußmodul SLMC werden die Signalisierungsinformationen si aus dem Signalisierungskanal - bei ISDN-Basisanschlüssen mit D-Kanal bezeichnet - gelesen und an eine Umsetzeinrichtung UE weitergeleitet. Hierbei werden die Signale an die physikalischen Bedienungen einer internen Schnittstelle IS angepaßt. Die Signalisierungsinformationen si werden von und zur Kommunikationsanlage im Signalisierungskanal durch Signalisierungspakete sp übermittelt, wobei im Kopf eines Signalisierungspaketes sp die ein Signalisierungspaket anzeigende Information ai und im Nachrichtenteil die Signalisierungsinformationen si übermittelt werden. Bei den Signalisierungsinformationen si handelt es sich insbesondere um Wählinformationen, und Informationen zur Leistungsmerkmalsteuerung und -beeinflussung.

In der Umsetzeinrichtung UE werden die ankommenden Signalisierungsinformationen si in Pakete pbn eingefügt, die für eine Übermittlung über das Busnetz BN geeignet sind. Hierzu werden in den Kopf dieses Paketes pbn eine Ursprungs- und eine Zieladresse sa, da eingetragen, die aus den von der Kommunikationsanlage übermittelten Signalisierungsinformationen si abgeleitet werden. Die Ziel- und die Ursprungsadresse sa, da repräsentieren die Netzadressen der an das Busnetz BN angeschlossenen Personalcomputer PC . Die derart gebildeten Pakete pbn werden über eine interne Schnittstelle IS an ein Anpassungsmodul MAU gesteuert und von diesem an das Busnetz BN übertragen. Die Anpassungseinheit MAU ist beispielsweise gemäß dem IEEE-Standard 802.3 realisiert. Hierbei werden insbesondere Signalisierungssignale si an die physikalischen Eigenschaften des Busnetzes BN angepaßt. Analog hierzu werden die Signalisierungsinformationen si in den vom Busnetz BN übermittelten Paketen pbn gelesen und in Signalisierungspakete sp eingefügt. Das Umpacken der Signalisierungsinformationen si und das Bilden der Ziel- und der Ursprungsadressen sa, da wird mit Hilfe einer in der Umsetzeinrichtung UE gespeicherten Signalisierungsroutine SR bewirkt, durch die ein zugeordnetes Mikroprozessorsystem CPU der Umsetzeinrichtung UE gesteuert wird. Desweiteren überwacht und koordiniert das mit der ISDN-Basisanschluß SO und dem Anpassungsmodul MAU verbundene Mikroprozessorsystem CPU die Funktionen der Umsetzeinrichtung UE.

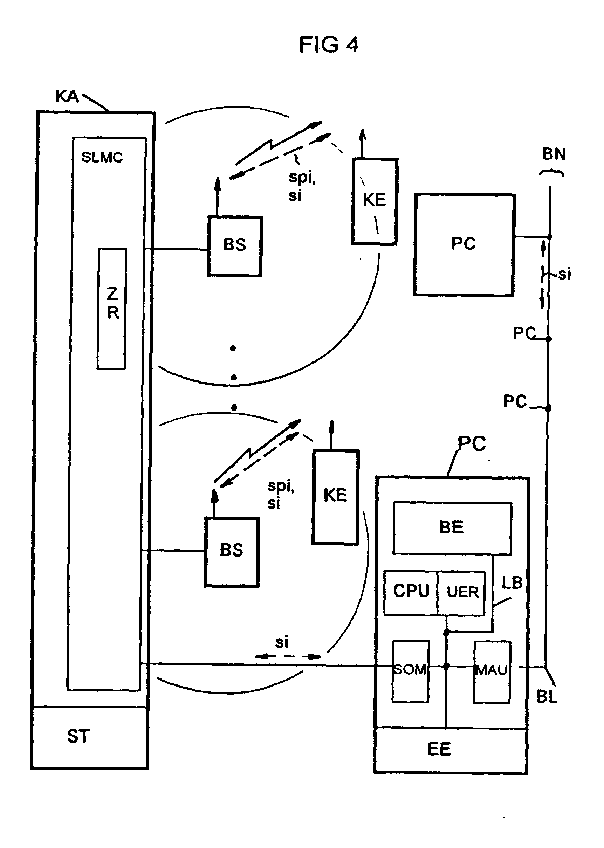

Fig 4 zeigt eine Kommunikationsanlage KA mit einer zentralen Steuerung ST und einem Teilnehmeranschlußmodul SLMC, an das Basisstationen BS eines drahtlosen, mehrzellularen Fernsprechsystems anschließbar sind. Beispielhaft sind in Fig. 4 zwei Basisstationen BS dargestellt, wobei an die Basisstationen BS jeweils mehrere Kommunikationsendgeräte KE drahtlos anschließbar sind. Die Kreise um die Basisstationen BS repräsentieren den zugehörigen Funkbereich. Der Anschluß der Basisstationen BS an die Kommunikationsanlage KA erfolgt wie in Fig.1 erläutert entweder durch einen ISDN - Basisanschluß SO oder durch einen mit einer intergrierten Übertragungstechnik - insbesondere gemäß dem Zeitgetrenntlage- Übertragungsverfahren - ausgestatten ISDN - Basisanschluß. An das Teilnehmeranschlußmodul SLMC ist über einen weiteren ISDN-Basisanschluß S0 an einen Personalcomputer PC angeschlossen. Hierfür ist Personalcomputer PC mit einem ISDN- Basisanschlußmodul SOM ausgestattet. Über einen lokalen Prozessorbus LB ist dieses ISDN- Basisanschlußmodul SOM mit einer bekannten Eingabe,- Bildschirm- sowie Mikroprozessoreinrichtung EE,BE,CPU und darüberhinaus mit einer Anpassungseinheit MAU verbunden, die gleichartig zu der in Fig.3 erläuterten Anpassungseinheit MAU aufgebaut ist. Die Funktionen einer Umsetzeinrichtung UE gemäß Fig.3 sind in der Mikroprozessoreinrichtung CPU programmtechnisch durch eine Umsetzroutine UER realisiert. Die Anpassungseinheit MAU, das ISDN-Basisanschlußmodul SOM und die Umsetzroutine UER stellen zusammen eine in einem der Personalcomputer PC des Busnetzes BN integrierte Netzübergangseinrichtung GWE dar.

Die Anpassungseinheit MAU ist mit einer Busleitlung BL eines Busnetzes BN verbunden, an das mehrere Personalcomputer PC anschließbar sind, wobei in Fig.4 beispielhaft ein weiterer Personalcomputer PC dargestellt ist. Jedem der Personalcomputer PC ist eines der drahtlos an eine der Basisstationen BS angeschlossenen Kommunikationsendgeräte KE zugeordnet. Die vermittlungstechnische Zuordnung der Kommunikationsendgeräte KE zu den Personalcomputern PC wird, wie in Fig.2 erläutert, durch eine im Teilnehmeranschlußmodul SLMC implementierte Zuordnungsroutine ZR bewirkt. Durch diese wird der erfindungsgemäße Fluß der Signalisierungsinformationen si von und zur Kommunikationsanlage KA - siehe Fig.2 - gesteuert. Diese Ausgestaltungsvariante des erfindungsgemäßen Kommunikationssystems wird vorteilhaft in mehrzellularen, d.h. größeren drahtlosen Fernsprechnetz eingesetzt.

## Patentansprüche

1. Kommunikationssystem mit einer Kommunikationsanlage (KA) und einer Netzübergangseinrichtung (GWE), bei dem Signalisierungsinformationen (si) zwischen der Kommunikationsanlage (KA) und zumindest einem Kommunikationsendgerät (KE) ausgetauscht werden,
- wobei das Kommunikationssystem über die Netzübergangseinrichtung (GWE) mit einem lokalen Netz (LAN) mit zumindest einem Personalcomputer (PC) verbunden ist und der zumindest eine Personalcomputer (PC) jeweils zumindest einem Kommunikationsendgerät (KE) zugeordnet ist,
- wobei die Netzübergangseinrichtung (GWE) über zumindest eine Verbindung (EV1...3, DV) mit der Kommunikationsanlage (KA) verbunden ist, wobei,
- im zumindest einem Personalcomputer (PC) Signalisierungsinformationen (si) gebildet und/oder gespeichert werden,
- wobei die Kommunikationsanlage (KA) und die Netzübergangseinrichtung (GWE) derart ausgestaltet sind,
- dass die vom zumindest einem Personalcomputer (PC) übermittelten Signalisierungsinformationen (si) an die Kommunikationsanlage (KA) weitergeleitet werden und
- dass die von der Kommunikationsanlage (KA) an das zumindest eine Kommunikationsendgerät (KE) abgegebenen Signalisierungsinformationen (si) zusätzlich an den zugeordneten Personalcomputer (PC) vermittelt werden
**dadurch gekennzeichnet,**
- **dass** zumindest eine mit der Kommunikationsanlage (KA) verbundene Basisstation (BS) vorgesehen ist, an die das zumindest eine Kommunikationsendgerät (KE) drahtlos angeschlossen ist, und
- **dass** dem Kommunikationsendgerät (KE) Sprachinformationen ausschließlich über die Basisstation ohne Beteiligung der Netzübergangseinrichtung (GWE) übermittelt werden.

2. Kommunikationssystem nach Anspruch 1,
**dadurch gekennzeichnet,**
**dass** die Kommunikationsanlage (KA) und die Netzübergangseinrichtung (GWE) zusätzlich derart ausgestaltet sind,
**dass** die im Kommunikationsendgerät (KE) gebildeten bzw. im zugeordneten Personalcomputer (PC) gebildeten und/oder gespeicherten Signalisierungsinformationen (si) an den zugeordneten Personalcomputer (PC) bzw. an das Kommunikationsendgerät (KE) vermittelt werden.

3. Kommunikationssystem nach Anspruch 1 oder 2,
**dadurch gekennzeichnet,**
**daß** die zumindest eine Verbindung (V) zwischen der zumindest einen Basisstation (BS) und der Kommunikationsanlage (KA) und die weitere Verbindung (EV) zwischen der Netzübergangseinrichtung (GWE) und der Kommunikationsanlage (KA) jeweils durch zumindest eine Leitung (L) realisiert ist, und daß die Leitung (L) jeweils mit einem Anschluß (SO) der Kommunikationsanlage (KA) und mit einem Anschluß (S0) der Basisstation (BS) oder der Netzübergangseinrichtung (GWE) verbunden ist.

4. Kommunikationssystem nach Anspruch 1 oder 2,
**dadurch gekennzeichnet,**
**daß** die Verbindung (V) zwischen der Netzübergangseinrichtung (GWE) und der Kommunikationsanlage (KA) durch eine drahtlose Verbindung (DV) realisiert ist und daß die drahtlose Verbindung (DV) jeweils mit einem Anschluß (S0) der Kommunikationsanlage (KA) und mit einem Anschluß (S0) der Netzübergangseinrichtung (GWE) verbunden ist.

5. Kommunikationssystem nach Anspruch 3 oder 4,
**dadurch gekennzeichnet,**
**daß** die Anschlüsse (S0) der Kommunikationsanlage (KA) und die Anschlüsse (S0) der zumindest einen Basisstation (BS) und der Netzübergangseinrichtung (GWE) durch einen ISDN-orientierten Anschluß (S0) realisiert sind.

6. Kommunikationssystem nach einem der vorhergehenden Ansprüche,
**dadurch gekennzeichnet,**
**daß** die im lokalen Netz (LAN) angeordnete Netzübergangseinrichtung (GWE-I) in die Kommunikationsanlage (KA) oder in einen der Personalcomputer (PC) integriert ist.

7. Kommunikationssystem nach einem der vorhergehenden Ansprüche,
**dadurch gekennzeichnet,**
**daß** das lokale Netz (LAN) durch ein lokales Busnetz (BN) realisiert ist und daß die Personalcomputer (PC) mit Hilfe von Netzzugriffseinrichtungen (NZE) an das lokale Busnetz (BN) gekoppelt werden.

8. Kommunikationssystem nach Anspruch 7,
**dadurch gekennzeichnet,**
**daß** das lokale Busnetz (BN) gemäß dem IEEE-Standard 802.3 realisiert ist.

9. Kommunikationssystem nach einem der Ansprüche 1 bis 6, **dadurch gekennzeichnet,**
**daß** das lokale Netz (LAN) durch ein drahtloses, lokales Busnetz (BND) realisiert ist.

10. Kommunikationssystem nach einem der vorhergehenden Ansprüche,
**dadurch gekennzeichnet,**
**daß** in der Kommunikationsanlage (KA) eine Zuordnungsroutine (ZR) derart ausgestaltet ist, daß die in der Kommunikationsanlage (KA) gebildeten oder gespeicherten Signalisierungsinformationen (si) über die betreffenden Anschlüsse (KS0) an die betroffene Basisstation (BS) und an die betroffene Netzübergangseinrichtung (GWE) übermittelt werden.

11. Kommunikationssystem nach einem der vorhergehenden Ansprüche,
**dadurch gekennzeichnet,**
**daß** in der Netzübergangseinrichtung (GWE) eine Signalisierungsroutine (SR) derart ausgestaltet ist, daß die kommunikationsanlagengemäßen Signalisierungsinformationen (si) und die Netzadressen der betroffenen Personalcomputer (PC) in lokale-Netz-gemäße Übertragungstelegramme eingefügt werden.

12. Kommunikationssystem nach Anspruch 11,
**dadurch gekennzeichnet,**
**daß** die Netzadressen (na) der Personalcomputer (PC) im lokalen Netz (LAN) mit Hilfe der Zuordnungsroutine (ZR) der Kommunikationsanlage (KA) oder der Signalisierungsroutine (SR) der Netzübergangseinrichtung (GWE) ermittelt werden.

## Claims

1. Communication system comprising a communication exchange (KA) and a gateway device (GWE), in which signalling information (si) is exchanged between the communication exchange (KA) and at least one communication terminal (KE),
- wherein the communication system is connected via the gateway device (GWE) by a local network (LAN) to at least one personal computer (PC) and the at least one personal computer (PC) is associated with in each case at least one communication terminal (KE),
- wherein the gateway device (GWE) is connected to the communication exchange (KA) via at least one connection (EV1...3, DV),
wherein
- signalling information (si) is formed and/or stored in the at least one personal computer (PC),
- wherein the communication exchange (KA) and the gateway device (GWE) are configured in such a way
- that the signalling information (si) transmitted by the at least one personal computer (PC) is forwarded to the communication exchange (KA) and
- that the signalling information (si) output by the communication exchange (KA) to the at least one communication terminal (KE) is additionally sent to the associated personal computer (PC),
**characterised**
- **in that** at least one base station (BS) is provided which is connected to the communication exchange (KA) and to which the at least one communication terminal (KE) is wirelessly connected, and
- **in that** voice information is transmitted to the communication terminal (KE) exclusively via the base station without any involvement of the gateway device (GWE).

2. Communication system according to claim 1, **characterised in that** the communication exchange (KA) and the gateway device (GWE) are additionally configured in such a way that the signalling information (si) formed in the communication terminal (KE) or formed and/or stored in the associated personal computer (PC) is sent respectively to the associated personal computer (PC) or to the communication terminal (KE).

3. Communication system according to claim 1 or 2, **characterised in that** the at least one connection (V) between the at least one base station (BS) and the communication exchange (KA) and the further connection (EV) between the gateway device (GWE) and the communication exchange (KA) is embodied in each case by at least one line (L), and **in that** the line (L) is in each case connected to a port (S0) of the communication exchange (KA) and to a port (S0) of the base station (BS) or of the gateway device (GWE).

4. Communication system according to claim 1 or 2, **characterised in that** the connection (V) between the gateway device (GWE) and the communication exchange (KA) is embodied by a wireless connection (DV), and **in that** the wireless connection (DV) is in each case connected to a port (S0) of the communication exchange (KA) and to a port (S0) of the gateway device (GWE).

5. Communication system according to claim 3 or 4, **characterised in that** the ports (S0) of the communication exchange (KA) and the ports (S0) of the at least one base station (BS) and of the gateway device (GWE) are embodied by an ISDN-oriented port (S0).

6. Communication system according to any one of the preceding claims, **characterised in that** the gateway device (GWE-I) arranged in the local network (LAN) is integrated in the communication exchange (KA) or in one of the personal computers (PC).

7. Communication system according to any one of the preceding claims, **characterised in that** the local network (LAN) is embodied by a local bus network (BN), and **in that** the personal computers (PC) are coupled to the local bus network (BN) by means of network access devices (NZE).

8. Communication system according to claim 7, **characterised in that** the local bus network (BN) is embodied in accordance with the IEEE standard 802.3.

9. Communication system according to any one of claims 1 to 6, **characterised in that** the local network (LAN) is embodied by a wireless, local bus network (BND).

10. Communication system according to any one of the preceding claims, **characterised in that**, in the communication exchange (KA), an association routine (ZR) is configured in such a way that the signalling information (si) formed or stored in the communication exchange (KA) is sent to the relevant base station (BS) and to the relevant gateway device (GWE) via the relevant ports (KS0).

11. Communication system according to any one of the preceding claims, **characterised in that**, in the gateway device (GWE), a signalling routine (SR) is configured in such a way that the signalling information (si) of the communication exchange and the network addresses of the relevant personal computers (PC) are inserted in transmission telegrams of the local network.

12. Communication system according to claim 11, **characterised in that** the network addresses (na) of the personal computers (PC) in the local network (LAN) are determined using the access routine (ZR) of the communication exchange (KA) or the signalling routine (SR) of the gateway device (SWE).

## Revendications

1. Système de communication comportant un équipement de communication (KA) et un dispositif de passerelle (GWE), dans le cadre duquel des informations de signalisation (si) sont échangées entre l'équipement de communication (KA) et au moins un terminal de communication (KE),
- sachant que le système de communication est relié à un réseau local (LAN) doté d'au moins un ordinateur personnel (PC) par l'intermédiaire d'un dispositif de passerelle (GWE) et que l'ordinateur personnel (PC) au moins au nombre de un est respectivement associé à au moins un terminal de communication (KE),
- sachant que le dispositif de passerelle (GWE) est relié à l'équipement de communication (KA) par l'intermédiaire d'au moins une liaison (EV1 ... 3, DV),
sachant que
- des informations de signalisation (si) sont formées et/ou mémorisées dans au moins un ordinateur personnel (PC),
- sachant que l'équipement de communication (KA) et le dispositif de passerelle (GWE) sont configurés de telle manière,
- que les informations de signalisation (si) transmises par au moins un ordinateur personnel (PC) sont transférées à l'équipement de communication (KA) et
- que les informations de signalisation (si) délivrées par l'équipement de communication (KA) au terminal de communication (KE) au moins au nombre de un sont en plus communiquées à l'ordinateur personnel (PC) associé, **caractérisé en ce**
- **qu'**au moins une station de base (BS) reliée à l'équipement de communication (KA) est prévue, à laquelle station de base est raccordé sans fil le terminal de communication (KE) au moins au nombre de un, et
- **que** des informations vocales sont transmises au terminal de communication (KE) uniquement par l'intermédiaire de la station de base sans participation du système de passerelle (GWE).

2. Système de communication selon la revendication 1,
**caractérisé en ce**
**que** l'équipement de communication (KA) et le dispositif de passerelle (GWE) sont en outre configurés de telle manière que les informations de signalisation (si) formées dans le terminal de communication (KE) ou formées et/ou mémorisées dans l'ordinateur personnel (PC) associé sont communiquées à l'ordinateur personnel (PC) associé ou au terminal de communication (KE).

3. Système de communication selon la revendication 1 ou 2,
**caractérisé en ce**
**que** la liaison (V) au moins au nombre de une entre la station de base (BS) au moins au nombre de une et l'équipement de communication (KA) et l'autre liaison (EV) entre le dispositif de passerelle (GWE) et l'équipement de communication (KA) sont respectivement créées par au moins une ligne (L), et en ce que la ligne (L) est reliée respectivement à un point de connexion (S0) de l'équipement de communication (KA) et à un point de connexion (S0) de la station de base (BS) ou du dispositif de passerelle (GWE).

4. Système de communication selon la revendication 1 ou 2,
**caractérisé en ce**
**que** la liaison (V) entre le dispositif de passerelle (GWE) et l'équipement de communication (KA) est créée par une liaison sans fil (DV), et en ce que la liaison sans fil (DV) est reliée respectivement à un point de connexion (S0) de l'équipement de communication (KA) et à un point de connexion (S0) du dispositif de passerelle (GWE).

5. Système de communication selon la revendication 3 ou 4,
**caractérisé en ce**
**que** les points de connexion (S0) de l'équipement de communication (KA) et les points de connexion (S0) de la station de base (BS) au moins au nombre de une et du dispositif de passerelle (GWE) sont créés par un point de connexion (S0) orienté ISDN.

6. Système de communication selon l'une quelconque des revendications précédentes,
**caractérisé en ce**
**que** le dispositif de passerelle (GWE-I) disposé dans le réseau local (LAN) est intégré dans l'équipement de communication (KA) ou dans l'un des ordinateurs personnels (PC).

7. Système de communication selon l'une quelconque des revendications précédentes,
**caractérisé en ce**
**que** le réseau local (LAN) est créé par un réseau linéaire local (BN), et en ce que les ordinateurs personnels (PC) sont couplés au réseau linéaire local (BN) à l'aide de dispositifs d'accès au réseau (NZE).

8. Système de communication selon la revendication 7,
**caractérisé en ce**
**que** le réseau linéaire local (BN) est créé selon la norme IEEE 802.3.

9. Système de communication selon l'une quelconque des revendications 1 à 6,
**caractérisé en ce**
**que** le réseau local (LAN) est créé par un réseau linéaire local sans fil (BND).

10. Système de communication selon l'un quelconque des revendications précédentes,
**caractérisé en ce**
**qu'**une routine d'allocation (ZR) est configurée dans l'équipement de communication (KA) de telle manière que les informations de signalisation (si) formées et/ou mémorisées dans l'équipement de communication (KA) sont transmises par l'intermédiaire des points de connexion (KS0) concernés à la station de base (BS) concernée et au dispositif de passerelle (GWE) concerné.

11. Système de communication selon l'une quelconque des revendications précédentes,
**caractérisé en ce**
**qu'**une routine de signalisation (SR) est configurée dans le dispositif de passerelle (GWE) de telle manière que les informations de signalisation (si) conformes à l'équipement de communication et les adresses réseau des ordinateurs personnels (PC) concernés sont insérées dans des télégrammes de transfert conformes au réseau local.

12. Système de communication selon la revendication 11,
**caractérisé en ce**
**que** les adresses réseau (na) des ordinateurs personnels (PC) sont déterminées dans le réseau local (LAN) à l'aide de la routine d'allocation (ZR) de l'équipement de communication (KA) et à l'aide de la routine de signalisation (SR) du dispositif de passerelle (GWE).
